Europäisches Patentamt

European Patent Office

Office européen des brevets

Publication number: **0 279 968**

**A1**

# EUROPEAN PATENT APPLICATION

Application number: 87301554.9

Int. Cl.⁴ **F04B 35/02 , F04B 49/02**

Date of filing: 24.02.87

Date of publication of application:
31.08.88 Bulletin 88/35

Designated Contracting States:
**BE DE ES FR IT NL SE**

Applicant: **BENDIX LIMITED**
**Douglas Road**
**Kingswood, Bristol BS15 2NL(GB)**

Inventor: **Christmas, Michael Charles**
**2 Bellvue Road**
**St.George Bristol BS5 7PG(GB)**

Representative: **Turner, Alan Reginald**
**c/o Bendix Limited Douglas Road**
**Kingswood, Bristol BS15 2NL(GB)**

## Reciprocating machine.

A piston and clinder air compressor has a connecting member (11) between a crank pin (10) of a crankshaft and a piston (6) which connecting member comprises a piston (26) and a piston rod (28) connected to the crankpin (10) and a cylinder (27) connected to the compressor piston (16) and lubrication oil pressure is selectively admitted to the cylinder in a sense to maintain a rigid connection when the compressor iis required to operate.

Xerox Copy Centre

## Reciprocating Machine

This invention relates to a reciprocating machine and relates especially but not exclusively to a piston and cylinder air compressor.

Piston and cylinder air compressors are commonly used in heavy road vehicles or rail vehicles with compressed air braking systems. Especially in heavy road vehicles such compressors are usually driven via suitable gearing by the vehicle engine and serve to charge one or more storage reservoirs for supplying independent braking circuits for the vehicle. In order to ensure charging of operative reservoirs in the event of failure of another reservoir or associated circuit, the reservoirs are normally charged through suitable circuit protection valves whereby the operative reservoir or reservoirs is assured of a predetermined level of charged pressure.

It is normal to provide such reservoir charging systems with a pressure responsive governor operable to control an unloader valve or a clutch whereby the compressor stops charging the reservoirs when a predetermined value of pressure is attained. It is recognised moreover that although an unloader valve is usually a simpler and cheaper device than a mechanical wet-plate or dry-plate clutch, a clutch interposed between drive means and the compressor, has the advantage that the crankshaft and piston assembly can be stationary during periods when no charging of the reservoirs is required. One benefit of this is that oil carry-over into the compressed air system may be appreciably less with a clutch driven compressor than with a compressor which uses an unloader valve.

Having regard for the extra space and complexity involved in incorporating a wet or dry plate clutch into a compressor drive, the present invention seeks to provide a reciprocating machine with an alternative means for disconnecting a rotary drive means froma reciprocating member.

According to the present invention there is provided a reciprocating machine including a first rotary member eccentrically pivotally connected via a connecting member to a reciprocating member whereby rotary motion of the first member is translated into reciprocating motion of the second member or vice vesa characterised in that said connecting member includes means whereby it is selectively rendered rigid or freely extensible to respectively connect or disconnect the drive between t he first member and the reciprocating member.

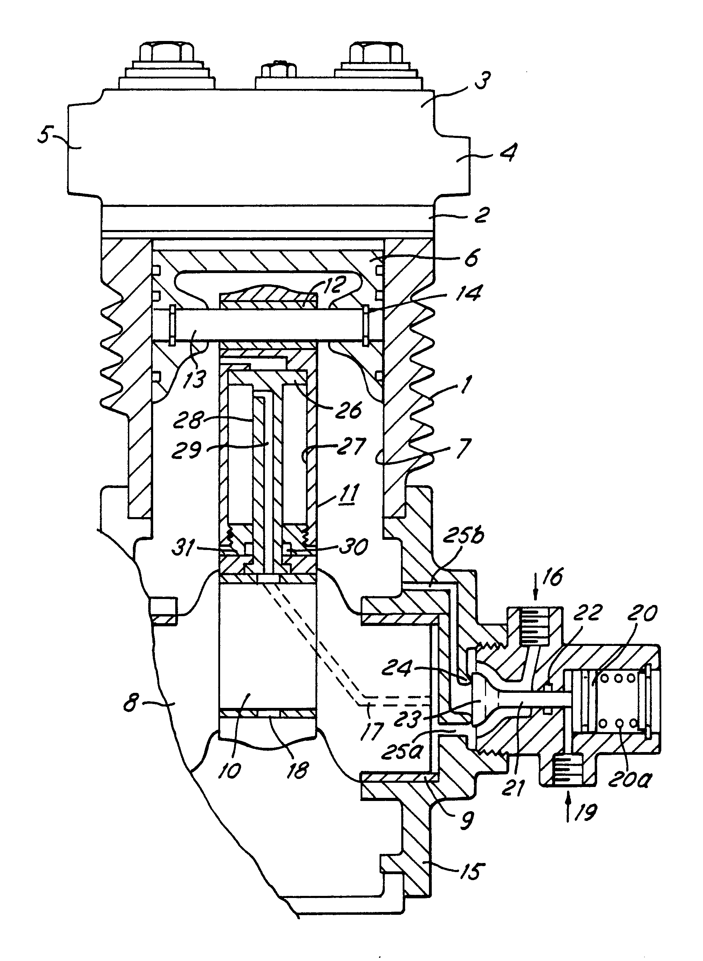

In order that the invention may be more clearly understood and readily carried into effect, the same will be further described by way of example as applied to a piston and cylinder air compressor with reference to the sectional diagrammatic view of an air compressor as shown in the accompanying drawing.

Referring to the drawing, the air compressor comprises a crankcase and cylinder housing denoted by reference 1, provided with a valve plate 2 and a cylinder head 3 with input and output ports 4 and 5 respectively. A conventional piston 6 is provided to reciprocate within the bone 7 of the compressor cylinder. A crankshaft 8 has main bearings such as the bearing 9 as shown and a crankpin 10 , pivotally connected via a composite connecting member 11 to a more or less conventional small end bush 12, a gudgeon pin 13 being located in the piston 6 by circlips 14 .

The bearing 9 is carried in a plate 15 which incorporates a pressure responsive valve assembly via which oil under pressure presented from the vehicle lubricating oil circuit to a port 16 is communicated via a valve arrangement and a bore 17 in the crankshaft 8 , to an annular recess 18 provided in the large end bearing. The valve assembly carried by plate 15 has a further port 19 which communicates with one side of a valve-controlling piston 20 biassed leftwards by a captive spring 20a . The piston 20 has a stem 21 which passes through a seal 22 and at the inner end carries a valve closure member 23 which under the influence of spring 21 rests against a valve seat 24 to close a passage 25b between port 16 and the crankcase. A further passage 25a exists between the port 16 and the adjacent end of the crankshaft 8 whereby with the valve in the position showing oil under pressure at port 16 is communicated to the composite connecting member 11 which is about to be described. The connecting member 11 comprises a piston part 26 connected to the big-end and sealingly slideable in the bore 27 of a cylinder part. The piston part 26 has a stem 28 with an internal passage 29 via which the passage 29 the annular recess 18 communicates with the interior of the cylinder bore 27. The stem 28 is sealingly slideable in a gland 30 in a screw-in closure part (31 at the lower end of the cylinder.

In operation of the air compressor, the crankshaft 8 is driven through a gear train (not shown) by the engine of a vehicle. Oil under pressure is applied at the port 16 by the engine lubrication system and with the piston 20 and valve closure member 23 in the position shown, this oil pressure is applied via the passage 25a the end of the crankshaft and passages 17 and 29 , to the interior of the cylinder bore 27 . This piston part 26 and cylinder are therefore retained by this pressure in the condition shown and the connecting rod operates as a solid connecting rod. When a govenor in the compressed air system senses that the or each reservoir is fully charged. a signal pressure is thereby applied to the port 19 . This acts on piston 20 to overcome the closing force of spring 21 whereby the valve member 23 lifts off the seat 24 . The oil pressure in the cylinder 27 is thereby relieved via passages 29. 17. 25a and 25b. This permits the stem 28) to move downwards in the gland (30) during downward movement of the crank pin (10 ) and as soon as any trapped air pressure in the compression chamber above the piston 6 has leaked away the piston 6 becomes more or less stationary. The compressor thus ceases to operate since the piston 26 freely reciprocates in the cylinder bore 27 . When the reservoir pressure descends to a lower value the signal at port 19 is removed by the governor and valve member 23 recloses over seat 24 whereby the oil pressure at port 16 is reapplied to passage 25a so that the piston 26 is again constrained to take up the position shown in the cylinder bore 27 . The compressor thus resumes normal operation.

It has to be recognised that with a piston and cylinder compressor such as described in the foregoing the oilways and the viscosity of the oil fed into the cylinder 27 may be such that this cylinder may not be scavenged within a single stroke of the piston 20 being actuated. The assembly will, therefore, require to be mechanically capable of accepting several partial piston strokes when going on or off-load.

Since the connecting rod assembly is pressurised by oil which also provides lubrication of the big-end bearing, it is also necessary to ensure that the pumping effect of air which takes place in the connecting rod when the compressor is off-load or idle, does not result in the bearing running completely devoid of lubrication. In order to avoid this the controlling valve arrangement may be adapted if required to provide oil spay to the crankcase during off-load periods.

In order to avoid unnecessary operation of the oil pressure relief valve which is usually included in the lubrication oil pump circuit it is desirable to include a check valve in the supply line to port 16 of the control valve Such a check valve will prevent excess back-pressure, as produced by the piston 26 in passage 17 reaching the relief valve in the oil pump circuit.

## Claims

1. A reciprocating machine including a first rotary member (8) eccentircally pivotally connected via a connecting member (11) to a reciprocating member (6) whereby rotary motion of the first member (8) is converted into reciprocating motion of the second member (6) or vice-versa characterised in that said connecting member (11) includes means (26. 27. 28) whereby it may be rigid or freely extensible such as to interconnect or disconnect the first member and the reciprocating member for such motion.

2. A reciprocating machine as claimed in claim 1, characterised in that the connecting member comprise a cylinder part (11) connected to one end thereof and a pressure responsive part (26. 28) sealingly slideable in the cylinder part and being connected to the other end thereof with valve means (20. 23) for selectively admitting fluid under pressure to or releasing fluid pressure from the cylinder part on one side of the pressure responsive part.

3. A reciprocating machine as claimed in claim 2 said fluid under pressure acting on said part (26) in a sense to urge said ends towards one another.

4. A reciprocating machine as claimed in claim 3 being a reciprocating piston and cylinder gas compressor and said fluid under pressure being supplied via said valve means from a lubrication system thereof.

5. A gas compressor as claimed in claim 4. the fluid under pressure being supplied via a large end bearing of the connecting member.

0 279 968

Neu eingereicht / Newly filed
Nouvellement déposé

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | LU-A- 44 876 (CERLES et al.)<br>* Page 2, paragraph 2 - page 4, paragraph 2; page 5, paragraph 5 - page 6, paragraph 2; page 13, paragraph 2 - page 14, paragraph 5; figure 4 * | 1-4 | F 04 B 35/02<br>F 04 B 49/02 |
| X | DE-A-2 946 529 (DITTNER)<br>* Whole document * | 1,2 | |
| A | US-A-2 573 689 (BUTLER)<br>* Column 3, line 68 - column 4, line 8 * | 1,5 | |
| E,X | GB-A-2 179 417 (BENDIX LTD)<br>* Whole document * | 1-5 | |

TECHNICAL FIELDS
SEARCHED (Int. Cl.4)

F 04 B
F 16 H
F 01 B
F 02 D

The present search report has been drawn up for all claims

| Place of search | Date of completion of the search | Examiner |
|---|---|---|
| THE HAGUE | 28-10-1987 | VON ARX H.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82